Europäisches Patentamt

European Patent Office

Office européen des brevets

(11) Publication number: **0 141 624**
**B1**

## EUROPEAN PATENT SPECIFICATION

(45) Date of publication of patent specification: **11.10.89**

(51) Int. Cl.⁴: **H 02 M 1/088**

(21) Application number: **84307342.0**

(22) Date of filing: **25.10.84**

(54) Power converter.

(30) Priority: **02.11.83 JP 204914/83**

(43) Date of publication of application:
**15.05.85 Bulletin 85/20**

(45) Publication of the grant of the patent:
**11.10.89 Bulletin 89/41**

(84) Designated Contracting States:
**CH DE GB LI SE**

(56) References cited:
**DE-A-3 221 831**
**US-A-3 842 337**
**US-A-3 878 448**
**US-H- 958 008**

**PATENT ABSTRACTS OF JAPAN, VOL. 7, NO. 136 (E-181)1281r, 14TH JUNE 1983; & JP - A - 51770**

**PATENT ABSTRACTS OF JAPAN, VOL. 7, NO. 136 (E-181)1281r, 14TH JUNE 1983; & JP - A - 58 - 51769**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Seki, Nagataka c/o Patent Division**
**Toshiba Corporation Principal Office**
**1-1 Shibaura 1-chome Minato-ku Tokyo (JP)**
Inventor: **Ichikawa, Kosaku c/o Patent Division**
**Toshiba Corporation Principal Office**
**1-1 Shibaura 1-chome Minato-ku Tokyo (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

## Description

This invention relates generally to a power converter and more particularly to a power converter which has a plurality of serially connected self-turn-off semiconductor elements.

Gate turn-off thyristors (hereinafter referred to as GTO thyristors), static induction thyristors, power transistors and field effect transistors are generically called herein self-turn-off semiconductor elements; the conductive and non-conductive states of those elements can be controlled by signals applied to the control electrodes (which are called gates or bases). Such semiconductor elements have been significantly developed in larger capacity in recent years, and have been widely applied to larger capacity power converters such as inverters, choppers and converters.

In general, when semiconductor elements are to be used in a high voltage circuit the voltage of which exceeds the breakdown voltage of the individual semiconductor element, a number of semiconductor elements are arranged in series connection so that the voltage across each respective semiconductor element is less than its breakdown voltage. It is usual to employ at least one more self-turn-off semiconductor element than is necessary in order to increase the reliability of the circuit. Then, should one semiconductor element fail in a power converter having n serially connected semiconductor elements, the power converter can continue its operation with the remaining (n-1) operative semiconductor elements.

It is well known that a GTO thyristor or a static induction thyristor can be turned on or turned off in terms of the anode current by application of respectively an on-gate signal or an off-gate signal to its control electrode (generally called "gate").

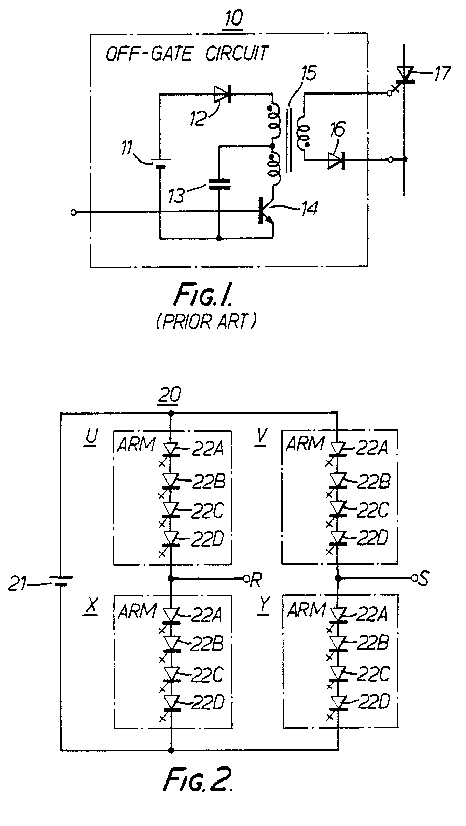

Figure 1 shows an example of an off-gate circuit suitable for a GTO thyristor. The circuit 10 has a DC power source 11, a diode 12, a capacitor 13, a transistor 14, a pulse transformer 15 and a diode 16, and outputs an off-gate signal to a GTO thyristor 17. The operation of this circuit is described in detail in the Japanese patent disclosure No. 56-136023, so that the detailed description thereof is omitted. In Figure 1, when the GTO thyristor 17 operates normally, there is a given impedance between the cathode and the gate thereof, and the thyristor operates with Zener characteristics, so that, after decrease of the anode current, the amount of the off-gate current is determined by the Zener characteristics between the cathode and the gate. But if the GTO thyristor 17 is to be operated for a long time with the cathode short-circuited to the gate, the rated current of the components in the circuit 10 such as the capacitor 13, the transistor 14 and the diode 16 must be increased.

Because a self-turn-off semiconductor element, such as a GTO thyristor, has an internal structure of multi-parallel emitter configuration, there is an extremely strong possibility that, when it is once damaged due to some cause, the portions between the anode and the cathode and between the gate and the cathode thereof become fully short-circuited. Therefore, when a power converter which is constructed with serially connected self-turn-off semiconductor elements and is provided with more such elements than is essential, for the purpose of ensuring continued operation, even when at least one of the semiconductor elements is damaged, it is not economical to supply continuously a control current, such as the off-gate current, to any failed self-turn-off semiconductor element.

It is known from US—A—3878448 and US—A—3842337 for a power converter to include a plurality of serially connected self-turn-off semiconductor elements, each of which receives a non-conductive control signal, and each semiconductor element has a detector associated with it for determining whether or not it is conductive.

An object of the invention is to provide an economical and reliable power converter constructed with a plurality of serially connected self-turn-off semiconductor elements.

According to the present invention, a power converter includes a plurality of serially connected self-turn-off semiconductor elements; first control circuit means for producing a control signal; a plurality of second control circuit means, each being connected to said first control circuit means for receiving said control signal to supply a non-conduction control signal to a corresponding one of the semiconductor elements to turn it off upon reception of said control signal; and a plurality of detectors, each being connected to a corresponding one of the semiconductor elements for detecting the state thereof and for producing a state signal indicating the state thereof; characterised in that said power converter further includes a plurality of interception means, each being connected to a corresponding one of the detectors for receiving the corresponding state signal and for blocking the application of the corresponding non-conduction control signal to the corresponding semiconductor element only when the corresponding state signal indicates that the corresponding semiconductor element is in failure.

The invention will be more readily understood by way of example from the following description of embodiments thereof, reference being made to Figures 2 to 12 of the accompanying drawings, in which:—

Figure 2 is a block diagram of a power converter;

Figure 3 is a detailed circuit diagram of each of the arms U, V, X and Y of the converter of Figure 2;

Figure 4 is a detailed circuit diagram of the drive circuit 32A and the detector 33A shown in Figure 3;

Figure 5 is a timing charge explaining the operation of the circuit of Figure 4;

Figure 6 is a block diagram illustrating in part a second embodiment;

Figure 7 shows waveforms observed when a GTO thyristor is turned off;

Figure 8 is a detailed circuit diagram of the drive circuit 61A and the detector 62A of Figure 6;

Figure 9 is a timing chart to explain the operation of the circuit shown in Figure 8; and

Figures 10 to 12 are block diagrams illustrating further embodiments.

In the drawings like reference numerals designate identical or corresponding parts throughout the several figures.

In Figure 2 reference numeral 20 designates a power converter such as a single-phase inverter. The single-phase inverter 20 includes a DC power source 21 and four bridge-connected arms U, V, X and Y. Each of the arms U, V, X and Y includes four serially connected self-turn-off type semiconductor elements illustrated as GTO thyristors 22A, 22B, 22C and 22D. Each arm has one more semiconductor element than is necessary; as a result, when one of the four GTO thyristors 22A, 22B, 22C and 22D fails, the single-phase inverter 20 can maintain its continuous operation. R and S designate output terminals of the single-phase inverter 20.

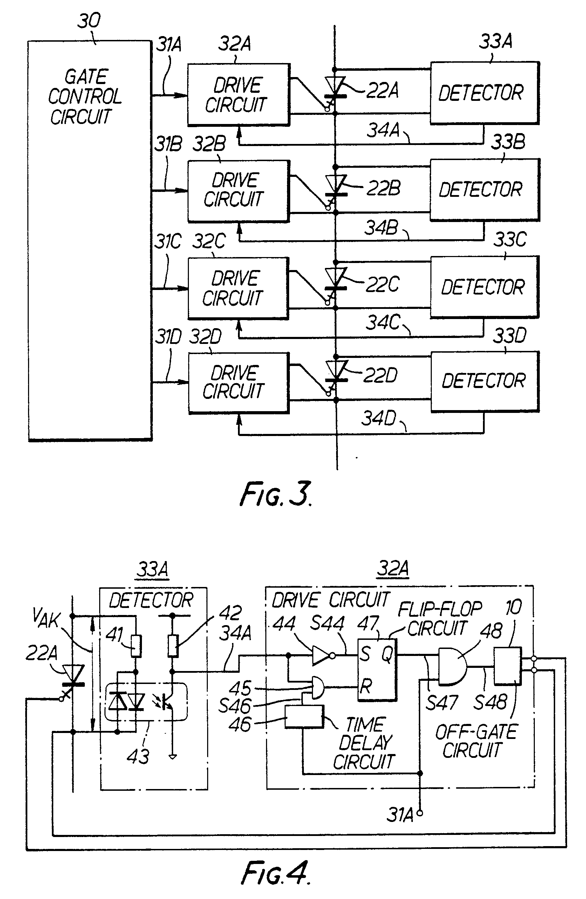

Figure 3 shows a detailed circuit configuration of each of the arms U, V, X and Y. In Figure 3 a gate control circuit 30 outputs a control signal 31A, 31B, 31C and 31D. The gate control circuit 30 is well known to those skilled in the art, so that detailed description thereof will be omitted. Drive circuits 32A, 32B, 32C and 32D respectively receives control signals 31A, 31B, 31C and 31D from the gate control circuit 30. Detectors 33A, 33B, 33C and 33D, respectively, detect the voltages between the anodes and cathodes of the serially connected GTO thyristors 22A, 22B, 22C and 22D and output signals 34A, 34B, 34C and 34D to the drive circuits 32A, 32B, 32C and 32D based on the detected voltages so as to control the operations of the drive circuits 32A, 32B, 32C and 32D.

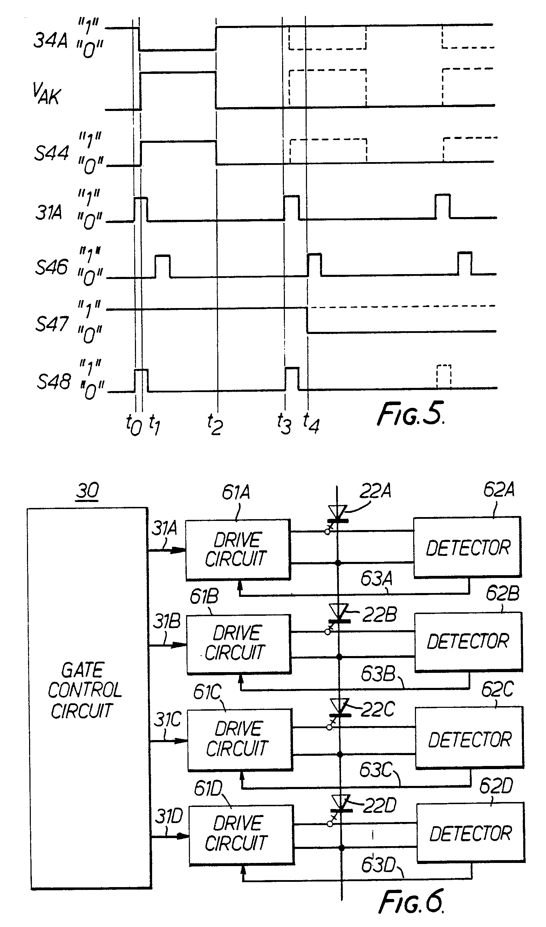

Figure 4 shows an example of a circuit configuration of the drive circuit 32A and the detector 33A. The detector 33A includes resistors 41 and 42 and a photo-coupler 43 and is connected between the anode and cathode of the GTO thyristor 22A. The detector 33A detects a voltage $V_{AK}$ between the anode and the cathode of the GTO thyristor 22A and outputs the signal 34A based on the detected voltage $V_{AK}$. The drive circuit 32A includes an off-gate circuit 10 and an interception means comprising a NOT circuit 44, an AND circuit 45, a time-delay circuit 46, a flip-flop circuit 47, and an AND circuit 48. The signal 34A outputted from the detector 33A is applied to the input terminal of the NOT circuit 44 and also to a first input terminal of the AND circuit 45. The control signal 31A from the gate control circuit 30 is applied to a second input terminal of the AND circuit 45 through the time-delay circuit 46 as a signal S46. The output signal S44 of the NOT circuit 44 is applied to the set terminal of the flip-flop circuit 47. The output signal of the AND circuit 45 is applied to the reset terminal of the flip-flop circuit 47. The output signal S47 at the Q terminal of the flip-flop circuit 47 is applied to a first input terminal of AND circuit 48. The control signal 31A is further applied to a second input terminal of AND circuit 48. The output signal S48 of AND circuit 48 is applied to the base terminal of the transistor 14 in the off-gate circuit 10. The off-gate circuit 10 generates an off-gate signal which is applied between the cathode and the gate of the GTO thyristor 22A. The drive circuits 32B, 32C and 32D and the detectors 33B, 33C and 33D have the same construction as the drive circuit 32A and the detector 33A, respectively.

The timing chart of Figure 5 explains the operation of the circuit of Figure 4. Assuming that the GTO thyristor 22A has been operating normally, at a time t0 the control signal 31A is changed from the "0" level to the "1" level by the gate control circuit 30. At a time shortly before the time t0, the levels of the signals are assumed to be as shown in Figure 5. As the output signal S47 is at the level "1", the control signal 31A is applied to the off-gate circuit 10 through AND circuit 48. The off-gate circuit 10 turns off the GTO thyristor 22A based on the control signal 31A. As the time t1 shortly after the time t0, the GTO thyristor 22A is turned off and the voltage $V_{AK}$ between the anode and cathode of the GTO thyristor 22A increases. The photo-coupler 43 in the detector 33A detects the change of the voltage $V_{AK}$ and changes the signal 34A from the level "1" to the level "0". The signal S44 changes from the level "0" to the level "1" due to the signal 34A and is applied to the set terminal of the flip-flop circuit 47. At this time, the signal S47 at the Q terminal of the flip-flop circuit 47 is at the level "1" and the flip-flop circuit 47 continues to be in the set state.

At a time t2 the GTO thyristor 22A is turned on by an on-gate circuit (not shown). Assuming that the GTO thyristor 22A fails between the time t2 and a time t3, the control signal 31A is changed from the "0" level to the level "1" by the gate control circuit 30 at the time t3. At the time t3 the signal S47 of the flip-flop circuit 47 is at the level "1", so that the control signal 31A is applied to the off-gate circuit 10 through the AND circuit 48. The off-gate circuit 10 operates to turn off the GTO thyristor 22A based on the control signal 31A. But as the GTO thyristor 22A has failed and the portions between the anode and the cathode thereof are completely short-circuited, the voltage $V_{AK}$ between the anode and the cathode is zero volts. Accordingly the signal 34A of the detector 33A is at the level "1". The NOT circuit 44 does not produce the signal S44 as shown in the dotted line in Figure 5. Instead, the signal S46 is applied through the AND circuit 45 to the reset terminal of the flip-flop circuit 47. Flip-flop circuit 47 is then reset at a time t4 and the signal S47 is changed to the level "0" from the level "1". After that, the control signal 31A is blocked at the drive circuit 32A, so that the signal S48 which is to be applied to the transistor 14 of the off-gate circuit 10 shown in Figure 1 is intercepted, and the off-gate circuit 10 stops applying the off-gate current to the failed GTO thyristor 22A. In Figure 5 the dotted lines indicate the levels of the signals when the GTO thyristor 22 does not fail.

In the case that the other GTO thyristors 22B, 22C and 22D fail, the respective off-gate circuits are stopped from applying the off-gate currents to the failed GTO thyristors 22B, 22C and 22D, respectively.

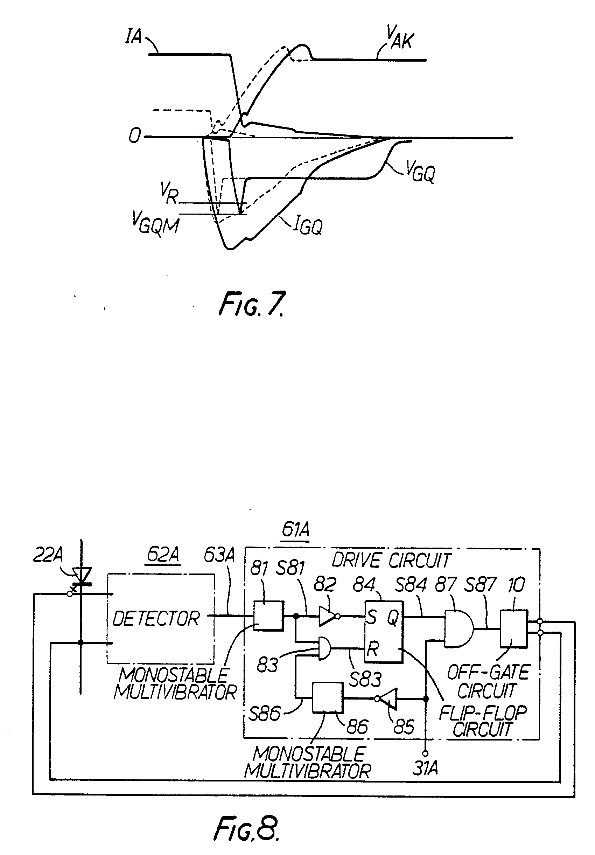

Figure 6 is a block diagram illustrating partially another circuit which can be used as each of the arms U, V, X and Y in Figure 2, instead of the circuit shown in Figure 3. In Figure 6, the control signals 31A, 31B, 31C and 31D from the gate control circuit 30 are applied to the drive circuits 61A, 61B, 61C and 61D, respectively. Detectors 62A, 62B, 62C and 62D detect the reverse voltages between the gates and the cathodes of the serially connected GTO thyristors 22A, 22B, 22C and 22D and output signals 63A, 63B, 63C and 63D based on the detected reverse voltages to the drive circuits 61A, 61B, 61C and 61D so as to control the operations of the drive circuits 61A, 61B, 61C and 61D, respectively. In Figure 6, the failure of any of the GTO thyristors 22A, 22B, 22C and 22D is detected by detecting the reverse voltage between the gate and the cathode of the respectively thyristor. In Figure 7, which shows the waveforms observed when a GTO thyristor is turned off, reference character $I_A$ designates an anode current, $V_{AK}$ designates the voltage between the anode and the cathode, $I_{GQ}$ designates an off-gate current and $V_{GQ}$ designates an off-gate voltage of the GTO thyristor, respectively. The respective dotted lines show waveforms observed when the anode current $I_A$ is relatively smaller. When the GTO thyristor is normally operating, a Zener characteristic voltage $V_{GQM}$ (−20 volts through −30 volts, for example) appears between the cathode and the gate after the GTO thyristor is turned off. The amount of the voltage $V_{GQM}$ is substantially independent of the anode current $I_A$, as is shown in Figure 7. Whether or not the GTO thyristor has failed can thus be detected by detecting whether or not the voltage $V_{GQM}$ appears.

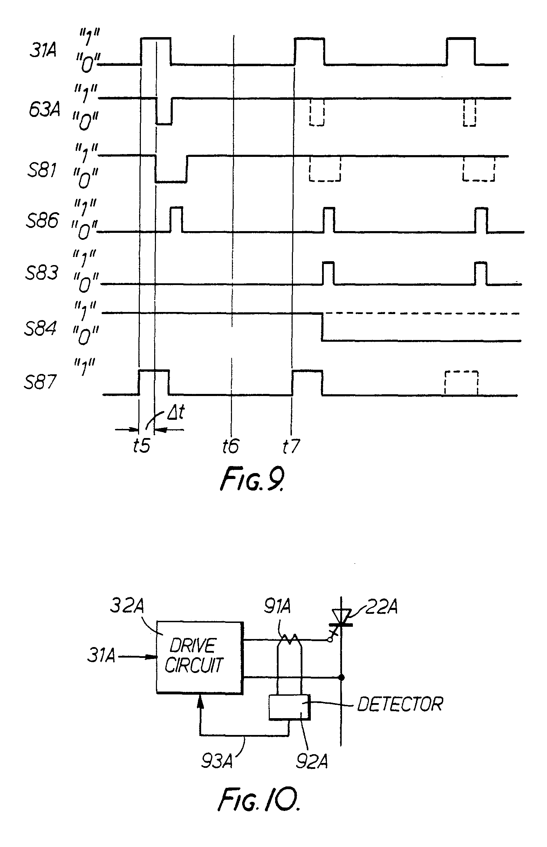

Figure 8 shows an example of a circuit configuration of the drive circuit 61A and the detector 62A. In Figure 8, the drive circuit 61A includes a monostable multivibrator 81, a NOT circuit 82, an AND circuit 83, a flip-flop circuit 84, a NOT circuit 85, a monostable multivibrator 86, an AND circuit 87 and the off-gate circuit 10 shown in Figure 1. The signal 63A outputted from the detector 62A is applied to the input terminal of the monostable multivibrator 81. The monostable multivibrator 81 produces a shaped signal S81 based on the signal 63A which is applied to the input terminal of the NOT circuit 82 and to a first input terminal of the AND circuit 83. The control signal 31A from the gate control circuit 30 is applied to the input terminal of the monostable multivibrator 86 through the NOT circuit 85. The output signal S86 of the monostable multivibrator 86 is applied to a second input terminal of AND circuit 83. The output terminal of the NOT circuit 82 is connected to a set terminal of the flip-flop circuit 84. An output signal S83 of the AND circuit 83 is applied to the reset terminal of the flip-flop circuit 84. The output signal S84 at a Q terminal of the flip-flop circuit 84 is applied to a first input terminal of the AND circuit 87. The control signal 31A is also applied to a second input terminal of the AND circuit 87. The output signal S87 of AND circuit 87 is applied to the base terminal of the transistor 14 in the off-gate circuit 10. The detector 62A detects the reverse voltage $V_{GQ}$ between the gate and the cathode of the GTO thyristor 22A and outputs the signal 63A. Signal 63A becomes the level "0" when the detected reverse voltage $V_{GQ}$ is lower than a predetermined voltage $V_R$ which is slightly higher than the Zener characteristics voltage $V_{GQM}$ as shown in Figure 7, and takes the level "1" when the detected reverse voltage $V_{GQ}$ is not lower than the predetermined voltage $V_R$. The detector 62A can easily be constructed by those skilled in the art based on the above description, and a detailed description of the construction is unnecessary. The drive circuits 61B, 61C and 61D and the detectors 62B, 62C and 62D are the same as the drive circuit 61A and the detector 62A, respectively.

Figure 9 shows a timing chart to explain the operation of the circuit shown in Figure 8. Assuming that the GTO thyristor 22A has been operating normally, at a time t5 the control signal 31A is applied to the drive circuit 61A from the gate control circuit 30. When the GTO thyristor 22A is turned off by the off-gate circuit 10 by the control signal 31A, the voltage $V_{GQM}$ appears between the cathode and the gate of the GTO thyristor 22A with a delay time Δt. The detector 62A detects the voltage $V_{GQM}$ and outputs the signal 63A at level "0" as shown in Figure 9. The flip-flop circuit 84 is in the set state at the time t5 and remains unaltered by the signal S81 shaped by the monostable multivibrator 81, so that the signal S84 of the Q terminal of the flip-flop circuit 84 remains at level "1". At a time t6 the GTO thyristor 22A is turned on by an on-gate circuit (not shown). Assume that the GTO thyristor 22A fails between the time t6 and a time t7 at which the control signal 31A is applied to the drive circuit 61A. The off-gate circuit 10 operates to turn off the GTO thyristor 22A based on the control signal 31A, but as the GTO thyristor 22A has failed and the portion between the cathode and the gate thereof is completely short-circuited, the voltage $V_{GQM}$ does not appear between the cathode and the anode of the failed GTO thyristor 22A. Accordingly, the signals 63A and S81 remain at level "1" and the signals of the dotted line do not appear, so that the flip-flop circuit 84 is reset by the signal S86 of the monostable multivibrator 86 and the signal S84 is changed from level "1" to level "0". Then the control signal 31A is blocked in the drive circuit 61A, the signal S87 which is to be applied to the transistor 14 of the off-gate circuit shown in Figure 1 is intercepted, and the off-gate circuit 10 is prevented from applying the off-gate current to the failed GTO thyristor 22A. Should instead one of the other GTO thyristors 22B, 22C and 22D fail, the respective off-gate circuit is prevented from applying its off-gate current to the failed GTO thyristor 22B, 22C and 22D, respectively. In Figure 9 the dotted lines indicate the levels of the signals existing when the GTO thyristor 22A does not fail.

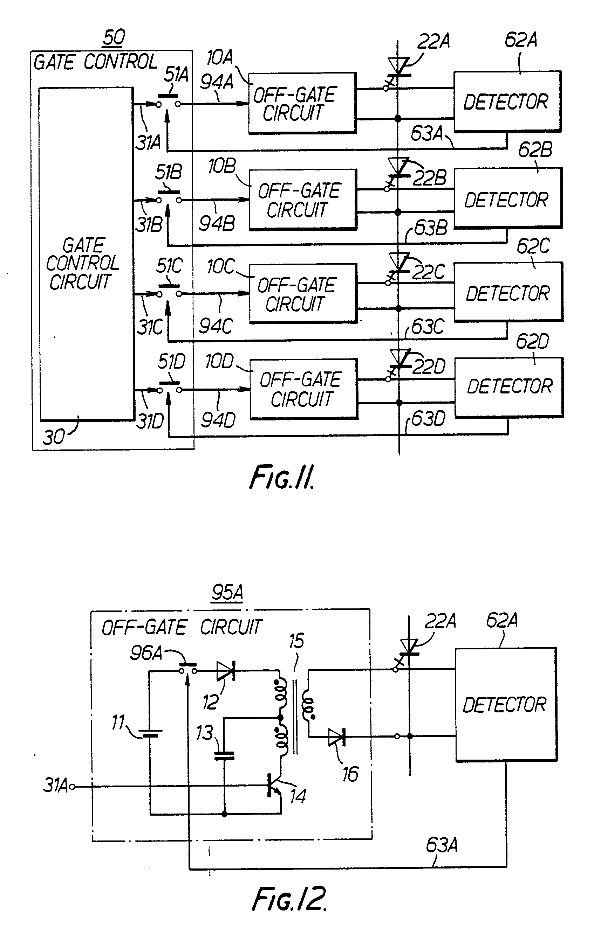

In the embodiment of Figure 10, the gate current of the GTO thyristor 22A is detected by a current transformer 91A and is applied to a detector 92A. When the detector 92A detects that a magnitude of the thus detected current deviates from a specified value, the detector 92A outputs a fault signal 93A to the drive circuit 32A so as to prevent the supply of the off-gate current to the failed GTO thyristor 22A. Usually, if the GTO thyristor fails and the portion between the gate and the cathode thereof has become short-circuited, an off-gate current of the GTO thyristor becomes 1.5 to 2 times the normal off-gate current, so that detection of the failed GTO thyristor can be readily made. The detector 92A can easily be constructed by those skilled in the art based on the above description so that the detailed description of the construction of the detector 92A will be omitted.

In Figure 11, detectors 62A, 62B, 62C and 62D are connected between the cathodes and the gates of the GTO thyristors 22A, 22B, 22C and 22D, and output signal 63A, 63B, 63C and 63D, to gate control 50. The gate control 50 includes the gate control circuit 30 and switches 51A, 51B, 51C and 51D, which are controlled by the signals 63A—63D from the detectors 62A—62D. The switches 51 when opened block the passage of control signals 31A, 31B, 31C and 31D to any of the GTO thyristors 22A, 22B, 22C and 22D that has failed. The modified control signals 94A, 94B, 94C and 94D from switches 51A—51D are applied to the base terminals of the transistors 14 in the respective off-gate circuits 10A, 10B, 10C and 10D. Each of the off-gate circuits 10A, 10B, 10C and 10D has the same construction as that of the off-gate circuit 10 shown in Figure 1. The off-gate circuit 10A, 10B, 10C and 10D generate off-gate signals which are applied between the cathodes and the gates of the GTO thyristors 22A, 22B, 22C and 22D, respectively. Here the signals 63A, 63B, 63C and 63D may be transmitted to the gate control circuit 50 by electrical means or optical means.

In the embodiment of Figure 12, the detector 62A is connected between the cathode and the gate of the GTO thyristor 22A and outputs the signal 63A to an off-gate circuit 95A. The off-gate circuit 95A has the same construction as the off-gate circuit 10 except that a switch 96A is provided between the DC power source 11 and the diode 12. The signal 63A is applied to control the switch 96A so that it opens switch 96A when the signal 63A indicates that the GTO thyristor 22A has failed. The control signal 31A is applied to the base terminal of the transistor 14 of the off-gate control circuit 95A.

The detectors 33A, 33B, 33C and 33D have been described above with examples utilizing a photo-coupler 43. However, any other component such as a pulse transformer that can transmit a signal while keeping insulation can be used in place of the photo-coupler.

Moreover, this invention is described with the embodiments wherein the GTO thyristors are used, but this invention can be applied to power converter constructed with other self-turn-off semiconductor elements such as static induction thyristors, power transistors and field effect transistors.

In the embodiment shown in Figure 2, a single-phase inverter has been described. But this invention is widely applicable to other power converters such as inverters, choppers and converters.

As described above, when a power converter such as an inverter, a chopper and a converter which is constructed with a plurality of serially connected self-turn-off semiconductor elements is designed to maintain continuous operation even when at least one element is failed, control of non-conduction with respect the failed element is stopped, thereby eliminating the need to unnecessarily make the components of the control circuit larger in size and capacity, so that there can be provided a highly economical and reliable power converter.

## Claims

1. A power converter (20) including a plurality of serially connected self-turn-off semiconductor elements (22); first control circuit means (30) for producing a control signal (31); a plurality of second control circuit means (10), each being connected to said first control circuit means (30) for receiving said control signal (31) to supply a non-conduction control signal to a corresponding one of the semiconductor elements (22) to turn it off upon reception of said control signal (31); and a plurality of detectors (33, 62, 92), each being connected to a corresponding one of the semiconductor elements (22) for detecting the state thereof and for producing a state signal (34, 63, 93) indicating the state thereof; characterised in that said power converter (20) further includes a plurality of interception means (44—48, 81—87, 51, 96), each being connected to a corrresponding one of the detectors (33, 62, 92) for receiving the corresponding state signal (34, 63, 93) and for blocking the application of the corresponding non-conduction control signal to the corresponding semiconductor element (22) only when the corresponding state signal (34, 63, 93) indicates that the corresponding semiconductor element (22) is in failure.

2. A power converter (20) according to claim 1, characterised in that each of the detectors (33) is connected between a positive electrode and a negative electrode of the corresponding self-turn-off semiconductor elements (22) for detecting a voltage ($V_{AK}$) between those electrodes and is arranged to produce the state signal (34) when that voltage ($V_{AK}$) has a given value.

3. A power converter (20) according to claim 1, characterised in that each detector (62) is connected between a control electrode and a negative electrode of the corresponding self-turn-off semiconductor elements (22) for detecting the voltage between those electrodes and is arranged to produce the state signal (63) when that voltage has a given value.

4. A power converter (20) according to claim 1, characterised in that each detector (91A, 92A), is connected between a control electrode of the corresponding self-turn-off semiconductor element (22A) and the output terminal of the second control circuit means for that semiconductor element and is arranged to detect a current flowing between said output terminal and said control electrode to produce the state signal (93A) when the current has a given value.

5. A power converter (20) according to any one of the preceding claims, characterised in that each of the interception means (44—48, 81—87, 51, 96) is connected to the second control circuit means (10) of the associated semiconductor element (22) to block the non-conduction control signal based on the state signal (34, 63, 93).

6. A power converter (20) according to claim 5, characterised in that each of the interception means includes means (44—48, 81—87, 51) connected to receive said control signal (31) and is arranged to prevent the corresponding control signal (31) from being supplied to the corresponding control circuit means (10) based on the corresponding state signal (34, 63, 93) so as to block the corresponding non-conduction control signal.

7. A power converter (20) according to claim 5, characterised in that each of the interception means includes means (96A) for preventing power from a power source (11) from being supplied to the corresponding second control circuit means (10) based on the corresponding state signal so as to block the non-conduction control signal.

**Patentansprüche**

1. Leistungsumformer (10) mit mehreren in Reihe geschalteten Halbleiterelementen (22) mit Selbstabschaltung,

einem ersten Steuerkreis (30) zur Erzeugung eines Steuersignals (31),

mehreren zweiten Steuerkreisen (10), die mit dem ersten Steuerkreis (30) verbunden sind zum Empfang des Steuersignals (31), um ein Nichtleitungs-Steuersignal einem der Halbleiterelemente (22) zuzuführen, um dieses bei Empfang des Steuersignals (31) abzuschalten und

mehreren Detektoren (33, 62, 92), die jeweils mit einem der Halbleiterelemente (22) verbunden sind, um deren Zustand abzutasten und um ein den Zustand anzeigendes Zustandssignal (34, 63, 93) zu erzeugen,

dadurch gekennzeichnet, daß der Leistungsumformer (20) ferner mehrere Haltemittel (44—48, 81—87, 51, 96) aufweist, die jeweils mit einem der Detektoren (33, 62, 92) verbunden sind zum Empfang des entsprechenden Zustandssignals (34, 63, 93) und zum Sperren der Beaufschlagung des entsprechenden Halbleiterelements (22) mit dem entsprechenden Nichtleitungs-Steuersignal lediglich dann, wenn das entsprechende Zustandssignal (34, 63, 93) anzeigt, daß das entsprechende Halbleiterelement (22) ausgefallen ist.

2. Leistungsumformer (20) nach Anspruch 1, dadurch gekennzeichnet, daß jeder der Detektoren (33) zwischen einer positiven Elektrode und einer negativen Elektrode des entsprechenden Halbleiterelements (22) mit Selbstabschaltung geschaltet ist zum Abtasten einer Spannung ($V_{AK}$) zwischen diesen Elektroden und das Zustandssignal (34) erzeugt, wenn die Spannung ($V_{AK}$) einen gegebenen Wert aufweist.

3. Leistungsumformer (20) nach Anspruch 1, dadurch gekennzeichnet, daß jeder Detektor (62) zwischen einer Steuerelektrode und einer negativen Elektrode der entsprechenden Halbleiterelemente (22) mit Selbstabschaltung geschaltet ist zum Abtasten der Spannung zwischen diesen Elektroden und das Zustandssignal (63) erzeugt, wenn die Spannung einen gegebenen Wert aufweist.

4. Leistungsumformer (20) nach Anspruch 1, dadurch gekennzeichnet, daß jeder Detektor (91A, 92A) zwischen einer Steuerelektrode des entsprechenden Halbleiterelements (22A) mit Selbstabschaltung und dem Ausgangsanschluß des zweiten Steuerkreises dieses Halbleiterelements geschaltet ist und einen zwischen dem Ausgangsanschluß und der Steuerelektrode fließenden Strom abtastet, um das Zustandssignal (93A) zu erzeugen, wenn der Strom einen gegebenen Wert aufweist.

5. Leistungsumformer (20) nach einem der vorhergehenden Ansprüche, dadurch gekennzeichnet, daß jedes der Haltemittel (44—48, 81—87, 51, 96) mit dem zweiten Steuerkreis (10) des zugeordneten Halbleiterelements (22) verbunden ist, um das auf dem Zustandssignal (34, 63, 93) basierende Nichtleitungs-Steuersignal zu sperren.

6. Leistungsumformer (20) nach Anspruch 5, dadurch gekennzeichnet, daß jedes der Haltemittel das Steuersignal (31) empfangende Mittel (44—48, 81—87, 51) aufweist und verhindert, daß das entsprechende Steuersignal (31) dem entsprechenden Steuerkreis (10) zugeführt wird in Abhängigkeit vom entsprechenden Zustandssignal (34, 63, 93), um das entsprechende Nichtleitungs-Steuersignal zu sperren.

7. Leistungsumformer (20) nach Anspruch 5, dadurch gekennzeichnet, daß jedes der Haltemittel Mittel (96A) aufweist, die verhindern, daß Leistung von einer Leistungsquelle (11) an den entsprechenden zweiten Steuerkreis (10) angelegt wird in Abhängigkeit vom entsprechenden Zustandssignal, um das Nichtleitungs-Steuersignal zu sperren.

**Revendications**

1. Convertisseur de puissance qui comprend un certain nombre d'éléments semiconducteurs à conduction commandée (22) montés en série; des premiers moyens de circuit de commande (30) pour produire un signal de commande (31); un certain nombre de seconds moyens de circuit de

6

commande (10), dont chacun est connecté auxdits premiers moyens de circuit (30) pour recevoir ledit signal de commande (31) afin de fournir un signal de commande de non-conduction à un élément semiconducteur (22) correspondant pour interrompre sa conduction en réponse à la réception de ce signal (31); et un certain nombre de détecteurs (33, 62, 92), dont chacun est connecté à un élément semiconducteur (22) correspondant afin de détecter l'état de celui-ci et pour produire un signal (34, 63, 93) indiquant l'état de celui-ci; caractérisé en ce que ledit convertisseur de puissance (20) comporte, en outre, un certain nombre de moyens d'interception (44—48, 81—87, 51, 96), dont chacun est connecté à un détecteur correspondant (33, 62, 92) pour recevoir le signal d'état correspondant (34, 62, 92) et pour bloquer l'application du signal de commande de non-conduction correspondant à l'élément semiconducteur correspondant (22) seulement quand le signal d'état correspondant (34, 63, 93) indique que l'élément semiconducteur correspondant (22) est en panne.

2. Convertisseur de puissance (20) selon la revendication 1, caractérisé en ce que chacun des detecteurs (33) est connecté entre une électrode positive et une électrode négative de l'élément semiconducteur (22) correspondant afin de détecter la tension ($V_{AK}$) présente entre ces électrodes et est arrangé pour produire le signal d'état (34) quand cette tension ($V_{AK}$) a une valeur donnée.

3. Convertisseur de puissance (20) selon la revendication 1, caractérisé en ce que chaque détecteur (62) est branché entre une électrode de commande et une électrode négative de l'élément semiconducteur à conduction commandée (22) correspondant afin de détecter la tension présente entre ces électrodes et est arrangé pour produire le signal d'état (63) quand cette tension a une valeur donnée.

4. Convertisseur de puissance (20) selon la revendication 1, caractérisé en ce chaque détecteur (91A, 92A), est monté entre une électrode de commande de l'élément semiconducteur correspondant (22A) et la borne de sortie du second moyen de circuit de commande pour cet élément semiconducteur et est arrangé pour détecter la circulation d'un courant entre ladite borne de sortie et ladite électrode de commande afin de produire le signal d'état (93A) quand ce courant a une valeur donnée.

5. Convertisseur de puissance (20) selon l'une quelconque des revendications précédentes, caractérisé en ce que chaque moyen d'interception (44—48, 81—87, 51, 96) est connecté au second moyen de circuit (10) de l'élément semiconducteur associé (22) afin de bloquer le signal de non-conduction sur la base du signal d'état (34, 63, 93).

6. Convertisseur de puissance (20) selon la revendication 5, caractérisé en ce que chaque moyen d'interception inclut des moyens (44—48, 81—87, 51) connecté pour recevoir ledit signal de commande (31) et est arrangé pour prévenir que le signal de commande correspondant (31) soit fourni au moyen de circuit de commande correspondant (10) en se basant sur le signal d'état correspondant (34, 63, 93) afin de bloquer le signal de commande de non-conduction correspondant.

7. Convertisseur de puissance (20) selon la revendication 5, caractérisé en ce que chaque moyen d'interception inclut des moyens (96A) pour empêcher que l'énergie d'une source d'alimentation (11) soit fournie au second moyen de circuit de commande correspondant (10) sur la base du signal d'état correspondant afin de bloquer le signal de commande de non-conduction.

EP 0 141 624 B1

FIG. I.

(PRIOR ART)

FIG. 2.

1

Fig. 3.

Fig. 4.

Fig.5.

Fig.6.

3

Fig. 7.

Fig. 8.

FIG. 9.

FIG. 10.

FIG.11.

FIG.12.